(19) Europäisches Patentamt

European Patent Office

Office européen des brevets

(11) **EP 0 641 639 B1**

(12) **EUROPÄISCHE PATENTSCHRIFT**

(45) Veröffentlichungstag und Bekanntmachung des Hinweises auf die Patenterteilung:
**12.05.1999 Patentblatt 1999/19**

(51) Int. Cl.$^6$: **B29C 47/04**, B29C 70/20

(21) Anmeldenummer: **94111361.5**

(22) Anmeldetag: **21.07.1994**

(54) **Kunststoff-Verbunde aus unverträglichen Kunststoffen**

Composite made of incompatible plastics

Composite fabriqué à partir de matières plastiques incompatibles

(84) Benannte Vertragsstaaten:
**AT BE CH DE DK ES FR GB IT LI NL SE**

(30) Priorität: **05.08.1993 DE 4326232**

(43) Veröffentlichungstag der Anmeldung:
**08.03.1995 Patentblatt 1995/10**

(73) Patentinhaber: **Röhm GmbH**
**64293 Darmstadt (DE)**

(72) Erfinder:
• **Benz, Volker, Dr.**
**D-64739 Höchst (DE)**
• **Lorenz, Hans**
**D-64291 Darmstadt (DE)**
• **Meier-Kaiser, Michael, Dr.**
**D-64319 Pfungstadt (DE)**
• **Müller, Michael, Dr.**
**D-64625 Bensheim (DE)**
• **Pöhlmann, Klaus-Ernst**
**D-64291 Darmstadt (DE)**

(56) Entgegenhaltungen:
BE-A- 543 020          DE-A- 2 049 545
FR-A- 2 423 320        US-A- 4 592 938

• PATENT ABSTRACTS OF JAPAN vol. 11, no. 352 (M-643) (2799) 18. November 1987 & JP-A-62 130 821 (FUKUVI. CHEM IND.) 13. Juni 1987
• PATENT ABSTRACTS OF JAPAN vol. 14, no. 91 (M-938) (4034) 20. Februar 1990 & JP-A-01 301 225 (SEISAN NIPPONSHA) 5. Dezember 1989
• PATENT ABSTRACTS OF JAPAN vol. 8, no. 152 (M-309) (1589) 14. Juli 1984 & JP-A-59 048 137 (TOYODA GOSEI) 19. März 1984

## Beschreibung

### Gebiet der Erfindung

Die Erfindung betrifft Kunststoff-Verbunde aus mindestens zwei unverträglichen Kunststoffen A und B im mehrschichtigen Verbund, wobei die Schichtenfolge zwischen A und B alternierend ist, die Schichten aus Kunststoff B in regelmäßigen Abständen unterbrochen sind und die Lücken in den Schichten B mit Kunststoff A ausgefüllt sind.

### Stand der Technik

Kunststoff-Verbunde sind bekannt. Dabei wird zumeist eine gute Haftung zwischen den Verbundelementen angestrebt.

Einer der technisch herausragenden Bereiche ist hierbei die Verstärkung von Kunststoff-Platten mit Fasern oder Bändern.

So beschreibt beispielsweise DE-OS 38 35 575 ein Verfahren zur Herstellung von endlosen Formkörpern aus mit thermoplastischen Kunststoffen imprägnierten Gebilden aus Verstärkungsfasern, wobei das Fasergebilde durch eine Schmelze des Thermoplasten geführt wird. Durch die Imprägnierung wird eine gute Haftung der Verstärkungsfasern in dem thermoplastischen Matrixmaterial erreicht.

DE-OS 38 40 374 umfaßt thermoplastische faserverstärkte Verbundwerkstoffe, die durch Imprägnieren von Verstärkungsfasern mit der Schmelze von Thermoplasten, Polyamiden, einem niedermolekularen Säureamid und gegebenenfalls einem Haftvermittler erhältlich sind, sowie Verfahren zu deren Herstellung und Verwendung. Beansprucht wird unter anderem ein Verfahren, bei dem eine Mischung aus Thermoplast, Polyamid, Säureamid und gegebenenfalls Haftvermittler in Form eines vorgefertigten Films oder eines frisch extrudierten Schmelzefilms eingesetzt wird und gemeinsam mit den Verstärkungsfasern, die in Form einer Matte oder in Form von unidirektionalen Endlosfastersträngen vorliegen, einer kontinuierlichen Presse zugeführt werden. Auch bei dieser Erfindung wird auf eine gute Haftung zwischen Fasern und thermoplastischer Matrix großen Wert gelegt.

US-Patent 4 058 581 beschreibt ein Verfahren zur kontinuierlichen Herstellung von durch Graphitfasern verstärkten Formkörpern, wobei zunächst die einzelnen Graphitfasern zur haftvermittelnden Imprägnierung durch eine Lösung eines thermoplastischen Harzes geführt werden, vorzugsweise durch ein mit Acrylsäure gepfropftes Polypropylen.

In EP-A 0 282 199 wird ein Verfahren zur Herstellung von Faserverbundwerkstoffen aus einer Thermoplastmatrix und unidirektionalen Verstärkungsfasern durch Imprägnieren der Fasern mit Thermoplastschmelze beschrieben. Hierbei werden kontinuierlich parallele, mechanisch nicht miteinander verbundene Faserbündel und ein thermoplastischer Kunststoff in eine Doppelbandpresse eingeführt und unter hohem Druck und hoher Temperatur eine bestimmte Zeit lang verpreßt und danach abgekühlt. Die Fasern werden bei diesem Verfahren vollständig und gleichzeitig imprägniert, wobei hohe Fasergehalte von mehr als 50 Vol.-% in der Thermoplastmatrix möglich sind. Auch hier steht die gute Haftung zwischen Fasern und Thermoplastmatrix im Vordergrund.

EP-PS 0 407 852 beschreibt als Lärmschutzelemente geeignete Platten aus Acrylglas, die etwa mittig monofile Kunststoff-Fäden oder ein Gittergewebe aus solchen Fäden eingebettet enthalten, wobei bevorzugt Polyamid-Fäden eingesetzt werden. Die Polyamid-Fäden weisen bei niedrigen Temperaturen keinen nennenswerten Verlust der Reißfestigkeit auf, weil die Haftung zwischen derartigen Fäden und dem sie umgebenden Acrylglas relativ gering ist.

JP-A-62 130 821 beschreibt einen Kunststoff-Verbund aus zwei thermoplastischen Kunststoffen, deren Schichtenfolge alternierend ist. Die Schichten des ersten Kunststoffs sind in regelmäßigen Abständen unterbrochen, wobei die Lücken mit dem zweiten Kunststoff ausgefüllt sind. Die beiden Kunststoffe sind im Gegensatz zur vorliegenden Erfindung miteinander verträglich.

### Aufgabe und Lösung

Bis auf EP-PS 0 407 852 beschreiben die im Stand der Technik referierten Patent- und Offenlegungsschriften ausschließlich Kunststoff-Verbunde mit Haftvermittlerschichten. Der Einsatz zusätzlicher Haftvermittler bedingt im allgemeinen einen hohen technischen Aufwand, wie beispielsweise Einspeisevorrichtungen für den Haftvermittler oder eine spezielle Schmelze- und/oder Extrudatführung bei coextrudierten Kunststoff-Verbunden.

Darüber hinaus ist die über Haftvermittlerschichten erzielbare Haftung im Kunststoff-Verbund begrenzt.

Daraus resultierte die Aufgabe, ein Verfahren zur Kombination unverträglicher Kunststoffe und insbesondere deren mechanischer Eigenschaften bereitzustellen, das ohne Haftvermittler auskommt. Die im Stand der Technik referierte Anmeldung EP-PS 0 407 852 löst diese Aufgabe nur bedingt und in sehr komplexer Weise, wobei insbesondere das diskontinuierliche Herstellen der Kunststoff-Verbunde aus Acrylglas und Kunststoff-Fäden sehr aufwendig ist.

Die Aufgabe wird gelöst durch einen mehrschichtigen Kunststoff-Verbund aus mindestens zwei thermoplastischen Kunststoffen (A) und (B), wobei die Schichtenfolge zwischen (A) und (B) alternierend ist, die Schichten aus Kunststoff (B) in regelmäßigen Abständen unterbrochen sind und die Lücken in den Schichten (B) mit Kunststoff (A) ausgefüllt sind,
dadurch gekennzeichnet,
daß die Kunststoffe (A) und (B) unverträglich sind.

In einer bevorzugten Ausführungsform der Erfindung sind die Schichten aus Kunststoff B als unidirektionale Stränge in den Kunststoff A eingelagert.

In einer weiteren bevorzugten Ausführungsform der Erfindung weist der Kunststoff B eine größere Wärmeausdehnung als der Kunststoff A auf, wobei besonders bevorzugt der Kunststoff A amorph und der Kunststoff B amorph, kristallin oder teilkristallin ist. Bevorzugt werden die Verbunde durch Coextrusion hergestellt, wobei ganz besonders bevorzugt der Kunststoff B mit oszillierendem Massestrom verarbeitet wird, was zum Resultat führt, daß sich die Querschnitte der Schichtsegmente aus Kunststoff B periodisch ändern.

## Durchführung der Erfindung

### Die thermoplastischen Kunststoffe A und B

Die Mischung zweier Polymerer (Kunststoffe) ist in der Regel unverträglich. Unverträgliche Polymermischungen werden beispielsweise als mechanische Polymermischungen bezeichnet (vgl. hierzu Kirk-Othmer, Encyclopedia of Chemical Technology, 3rd. Ed., Vol. 18, Seiten 443 bis 47, Wiley Interscience, 1982). Somit sind der Auswahl der Kunststoffe A und B nur wenig Grenzen gesetzt.

Bevorzugt ist der thermoplastische Kunststoff A amorph und weist einen geringeren Wärmeausdehnungskoeffizienten als der Kunststoff B, der amorph, teilkristallin oder kristallin sein kann, auf. Bevorzugt weist der Kunststoff B eine höhere Reißdehnung, eine höhere Scherstabilität sowie eine höhere Viskosität als der Matrixkunststoff A auf.

Beispielhaft sind als amorphe Kunststoffe A oder B zu nennen: Polyvinylester, Polyvinylether, amorphe Polyvinylhalogenide, Polystyrole, Polyphenylenoxide, Polyphenylensulfide, Polycarbonate, Polysulfone, amorphe Polyamide, Polyetherketone, Polyetheretherketone, Polyethersulfone, Polyimide, Polyetherimide, Polyfluoralkene, Polyestercarbonate, amorphe Polyolefine und ganz besonders bevorzugt Poly(meth)acrylate.

Beispiele für die kristallinen oder teilkristallinen Kunststoffe B sind Polymerisate, in denen die Kristallinität bedingt wird durch eine gleichmäßige Taktizität oder ausreichende kleine Substituenten, so daß sich zumindest partiell ein Kristallgitter ausbilden kann.

Beispielhaft zu nennen wären Polyester, kristalline Polyolefine, kristalline Polyvinylhalogenide, flüssigkristalline Polymere mit mesogenen Gruppen in Haupt- und/oder Seitenkette, oder besonders bevorzugt kristalline Polyamide. Zur Herstellung und Charakterisierung der Kunststoffe A und B vergleiche beispielsweise Kirk-Othmer, Encyclopedia of Chemical Technology, 3rd. Ed. Vol. 18, Seiten 720 bis 755, Wiley Interscience, 1982.

### Die Kunststoff-Verbunde

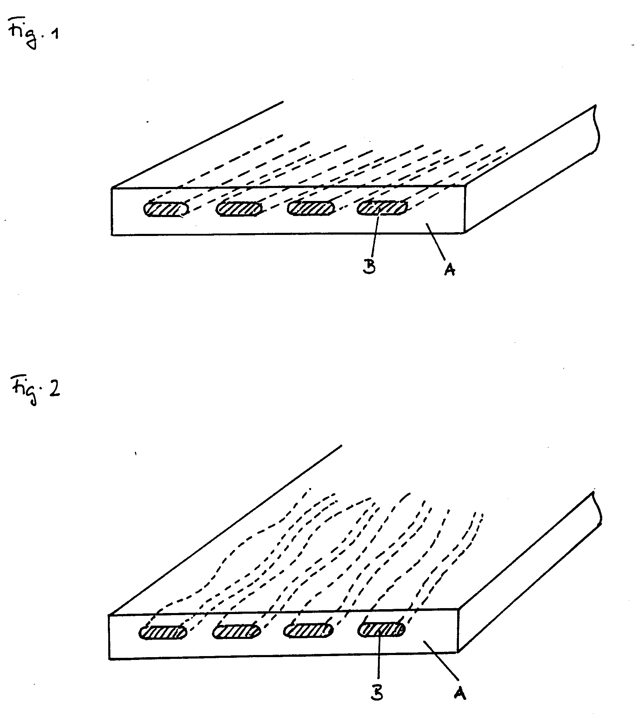

Fig. 1 zeigt den prinzipiellen Aufbau eines dreischichtigen Kunststoff-Verbundes, bestehend aus einem amorphen Kunststoff A und einem amorphen, kristallinen kristallinen oder teilkristallinen Kunststoff B mit der Schichtenfolge A-B-A. Die Schicht B ist in regelmäßigen Abständen durchbrochen, wobei die Lücken mit Kunststoff A ausgefüllt sind und damit eine intensive Haftung zwischen den beiden Schichten A gewährleistet wird.

Der Kunststoff B weist einen größeren Wärmeausdehungskoeffizienten als der Kunststoff A auf. Dadurch kann beim Abkühlen der Schichten aus Kunststoff B, die in den Kunststoff A eingebettet sind, durch den größeren thermischen Schrumpf von B bedingt, eine Vorspannung der Schichten aus Kunststoff B erreicht werden. Dies führt zu vorteilhaften mechanischen Eigenschaften des Kunststoff-Verbundes, wie beispielsweise höhere Bruchfestigkeit, höhere Biegefestigkeit, höhere Dimensionsstabilität und Vermeidung von Splitterbruch bei schlagender Beanspruchung.

Eine weitere vorteilhafte Ausgestaltung der Erfindung ist eine Einlagerung von Schichtsegmenten aus Kunststoff B, deren Querschnitte sich periodisch ändern, wobei eine ausgezeichnete Verankerung der Schichten aus Kunststoff B im Kunststoff A erreicht wird (Fig.2). Ebenso wird hier die Vorspannung der Schichten aus Kunststoff B beim Abkühlen deutlich erhöht, was zu den schon oben geschilderten mechanischen Vorzügen des Kunststoff-Verbundes beiträgt.

Bei Einsatz eines transparenten Kunststoffs A und eines nicht oder nur teilweise transparenten Kunststoffs B kann ein Kunststoff-Verbund mit abschattender Wirkung erhalten werden, wie er zum Beispiel für Sonnenblenden oder Lichtkollektoren eingesetzt wird.

Durch den Einsatz verschieden farbiger Kunststoffe A und B können Kunststoff-Verbunde für die Lichtreklame oder für weitere Einsatzmöglichkeiten im Beleuchtungs- und Dekorationssektor hergestellt werden.

### Herstellung der Kunststoff-Verbunde

Die erfindungsgemäßen Kunststoff-Verbunde aus vorzugsweise amorphem Kunststoff A und amorphem, kristallinem oder teilkristallinem Kunststoff B werden vorzugsweise verhältnismäßig einfach in einem Produktionsschritt durch Coextrusion hergestellt.

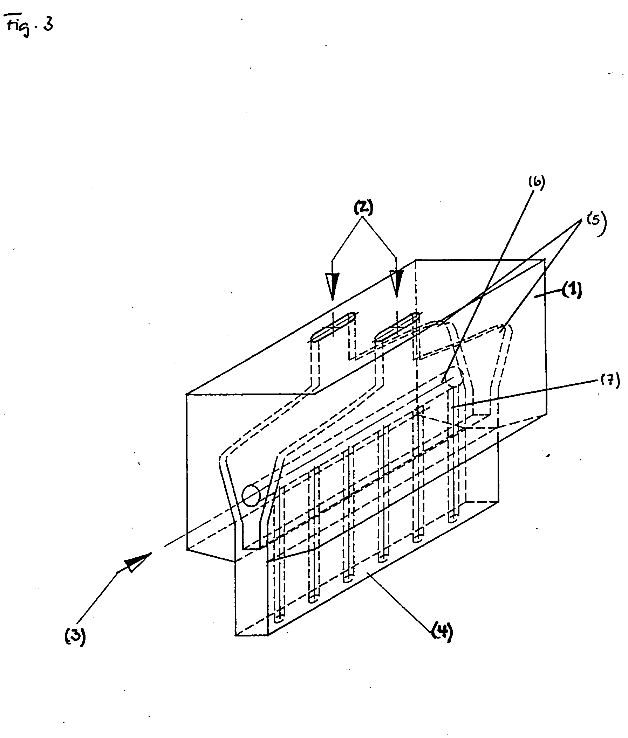

Fig. 3 zeigt das Kernstück der Anlage zur Herstellung des beschriebenen Verbundes, die sogenannte Coextrusionsdüse.

Bei der gezeigten Düse wird der Kunststoff A an den Einspeisestellen (2) eingespeist und dann in zwei getrennten Verteilerkanälen (5) auf die gewünschte Produktbreite verteilt. Zwischen den Verteilerkanälen (5) für den Kunststoff A wird der Kunststoff B an der Einspeisestelle (3) in eine Querverteilerbohrung (6) eingespeist. Der Kunststoff B verläßt die Querverteilerbohrung durch eine größere Anzahl von Bohrungen (7), die der Anzahl von Segmenten aus B in der Matrix aus A entspricht.

Dort wo B aus den Bohrungen austritt, werden auch die beiden Schichten aus A zusammengeführt und umschließen damit die Stränge aus Kunststoff B.

Die Querschnittsform der Segmente B in A hängt im wesentlichen von der Gestaltung der Bohrungen (7) im Auslaufbereich und dem Verhältnis der Viskositäten der Kunststoffe A und B ab. Ist die Viskosität von B größer als die Viskosität von A, so werden die Segmente von B und A im Querschnitt eher rund, bei umgekehrtem Viskositätsverhältnis eher flach.
Nach dem Verlassen der Düse kann der Verbund in einem konventionellen Glättwerk kalibriert werden. Da der Kunststoff B im Kunststoff A eingeschlossen ist, kann er nur relativ langsam abkühlen. Bei einem teilkristallinen oder kristallinen Kunststoff B werden hierdurch wesentlich höhere Kristallinitätsgrade erreicht, als bei konventioneller Extrusion der Stränge B.
Ist eine über der Länge periodische Änderung des Querschnitts der Segmente B erwünscht, so kann dies auf einfachem Wege durch periodische Änderung des an der Stelle (3) eingespeisten Massestroms erfolgen. Da der Kunststoff B eine höhere Wärmedehnung als der Kunststoff A hat, wird in Verbindung mit dem Formschluß zwischen den beiden Kunststoffen eine Vorspannung der Segmente B erreicht (vergleichbar mit Stahlbeton). Dies erlaubt eine weitere Steigerung der mechanischen Eigenschaften des Verbundes.

Folgendes Beispiel soll die Erfindung erläutern:

BEISPIEL

Läßt man auf eine 8 mm dicke, ebene Platte aus Polymethylmethacrylat (PMMA, Plexiglas® 7H, Fa. Röhm) aus einer Höhe von 1,5 m in einem Winkel von 45 Grad eine Stahlkugel mit einem Durchmesser von 100 mm (Gewicht ca. 4 kg) aufprallen, so wird diese Platte unter Bildung von vielen, großen Splittern durchgeschlagen.
Führt man denselben Versuch mi t einer erfindungsgemäßen Platte durch, wobei der Kunststoff A PMMA (Plexiglas® 7H der Fa. Röhm, Wärmeausdehnungskoeffizient $\alpha_1 = 1{,}8 \times 10^{-4} \, K^{-1}$ bie 120 Grad C ) und der Kunststoff B Polyamid 12 (Vestamid® X 1852 der Fa. Hüls AG, Wärmeausdehnungskoeffizient $\alpha_2 = 2{,}7 \times 10^{-4} \, K^{-1}$ bei 120 Grad C ) ist und wobei die Segmente B einen Abstand von 30 mm und einen Ovalen Querschnitt bei einem mittleren Durchmesser von 3 mm haben, so wird die Platte nur angerissen und im Auftreffpunkt der Kugel nach hinten gebeult, die Kugel wird gehalten und es entstehen keine Splitter.
Erhöht man bei der erfindungsgemäßen Platte die Fallhöhe der Kugel auf 2,2 m so wird die Platte von der Kugel durchgeschlagen. Trotzdem werden alle Splitter gehalten.
Das beschriebene Eigenschaftsbild kann durch den Einsatz von Segmenten B mit über der Länge periodisch sich änderdem Querschnitt und dem sich dadurch ergebenden Formschluß zwischen A und B noch weiter verbessert werden.

Der Wärmeausdehnungskoeffizient $\alpha$ wird nach DIN 53752 bestimmt.

**Patentansprüche**

1. Mehrschichtiger Kunststoff-Verbund aus mindestens zwei thermoplastischen Kunststoffen (A) und (B), wobei die Schichtenfolge zwischen (A) und (B) alternierend ist, die Schichten aus Kunststoff (B) in regelmäßigen Abständen unterbrochen sind und die Lücken in den Schichten (B) mit Kunststoff (A) ausgefüllt sind,
dadurch gekennzeichnet,
daß die Kunststoffe (A) und (B) unverträglich sind.

2. Mehrschichtiger Kunststoff-Verbund gemäß Anspruch 1, dadurch gekennzeichnet, daß die Schichten aus Kunststoff (B) als unidirektionale Stränge in den Kunststoff (A) eingelagert sind.

3. Mehrschichtiger Kunststoff-Verbund gemäß den Ansprüchen 1 und 2, dadurch gekennzeichnet, daß der Kunststoff (B) einen größeren Wärmeausdehnungs-koeffizienten als der Kunststoff (A) hat.

4. Mehrschichtiger Kunststoff-Verbund gemäß den Ansprüchen 1 bis 3, dadurch gekennzeichnet, daß der Kunststoff (A) amorph und der Kunststoff (B) amorph, teilkristallin oder kristallin ist.

5. Mehrschichtiger Kunststoff-Verbund gemäß den Ansprüchen 1 bis 4, dadurch gekennzeichnet, daß sich die Querschnitte der Schichtsegmente aus Kunststoff (B) periodisch ändern.

6. Verfahren zur Herstellung mehrschichtiger Kunststoffverbunde gemäß den Ansprüchen 1 bis 5, dadurch gekennzeichnet, daß das Schichtgefüge durch Coextrusion hergestellt wird.

**Claims**

1. A multi-layered plastic laminate of at least two thermoplastic materials (A) and (B), wherein the layer sequence alternates between (A) and (B), the layers of material (B) being interrupted at regular intervals and the gaps in the layers (B) being filled with material (A), characterised in that the materials (A) and (B) are incompatible.

2. A multi-layered plastic laminate according to claim 1, characterised in that the layers of material (B) are embedded in material (A) as unidirectional strands.

**3.** A multi-layered plastic laminate according to claims 1 and 2, characterised in that the material (B) has a larger thermal expansion coefficient than material (A).

**4.** A multi-layered plastic laminate according to claims 1 to 3, characterised in that material (A) is amorphous and that material (B) is amorphous, partially crystalline or crystalline.

**5.** A multi-layered plastic laminate according to claims 1 to 4, characterised in that the cross-sections of the laminated segments of material (B) change periodically.

**6.** A process for preparing multi-layered plastic laminates according to claims 1 to 5, characterised in that the laminated structure is prepared by coextrusion.

**Revendications**

**1.** Composite de matière plastique à plusieurs couches constitué au moins de deux matières plastiques thermoplastiques (A) et (B), la succession des couches entre (A) et (B) étant alternée, les couches de matière plastique (B) étant interrompues à des intervalles réguliers et les lacunes dans les couches (B) étant remplies par la matière plastique (A), caractérisé en ce que les matières plastiques (A) et (B) sont incompatibles.

**2.** Composite de matière plastique à plusieurs couches selon la revendication 1, caractérisé en ce que les couches de matière plastique (B) sont intégrées sous forme de brins unidirectionnels dans la matière plastique (A).

**3.** Composite de matière plastique à plusieurs couches selon les revendications 1 et 2, caractérisé en ce que la matière plastique (B) présente un plus grand coefficient de dilatation thermique que la matière plastique (A).

**4.** Composite de matière plastique à plusieurs couches selon les revendications 1 à 3, caractérisé en ce que la matière plastique (A) est amorphe et en ce que la matière plastique (B) est amorphe, partiellement cristalline ou cristalline.

**5.** Composite de matière plastique à plusieurs couche selon les revendications 1 à 4, caractérisé en ce que la section des segments de couche des matières plastiques (B) se modifie périodiquement.

**6.** Procédé de production de composites de matières plastiques à plusieurs couches selon les revendications 1 à 5, caractérisé en ce que l'on produit la structure de couche par coextrusion.

Fig. 1

B    A

Fig. 2

B    A

Fig. 3